# EUROPÄISCHE PATENTSCHRIFT

(11) **EP 2 913 606 B1**
(45) Veröffentlichungstag und Bekanntmachung des Hinweises auf die Patenterteilung: **21.08.2019**
(21) Anmeldenummer: 15156451.5
(22) Anmeldetag: 25.02.2015
(51) Int. Cl.: F24S 25/00, H02S 20/24

(54) **Ständeranordnung für ein Solarpaneel**
BASE ASSEMBLY FOR A SOLAR PANEL
SYSTÈME SUPPORT POUR UN PANNEAU SOLAIRE

(30) Priorität: 26.02.2014 DE 102014102546; 14.05.2014 DE 102014106800
(43) Veröffentlichungstag der Anmeldung: 02.09.2015
(73) Patentinhaber: Eisenwerk Wittigsthal GmbH, 08349 Johanngeorgenstadt (DE)
(72) Erfinder: Krug, Wilfried, Prof. Dr., 01277 Dresden (DE); Browa, Jochen, 08340 Schwarzenberg (DE)
(74) Vertreter: Gottfried, Hans-Peter

(56) Entgegenhaltungen:
- EP-A1- 2 348 264
- DE-A1-102010 017 705
- DE-A1-102012 105 053
- DE-U1- 20 120 983
- DE-U1-202009 007 481
- DE-U1-202009 007 537
- DE-U1-202010 005 385
- JP-A- 2003 008 045

## Beschreibung

Die Erfindung betrifft eine Ständeranordnung für wenigstens eine Einrichtung zur Umwandlung von Solarstrahlung in Elektroenergie in Plattenform (Solarpaneel), insbesondere für Flachdächer. Im Zuge eines hohen Kostendrucks auf die Solarpaneele bzw. die gesamten Photovoltaikanlagen besteht ein großes Interesse, nicht nur die Solarpaneele selbst, sondern auch die zugehörigen bzw. erforderlichen Befestigungseinrichtungen kostengünstig anzubieten sowie die Montage der Solarpaneele schnell und einfach durchzuführen.

Nach dem Stand der Technik sind zahlreiche Befestigungsmöglichkeiten bekannt, die vor allem auch für Flachdächer oder geringfügig geneigte Dächer geeignet sind. So ist der Druckschrift DE 26 39374 A1 eine Anordnung zur Befestigung eines Sonnenkollektors zu entnehmen. Diese besteht aus einem einzigen Ständer, der das Solarpaneel stützt. Die einteilige Ausführung hat zur Folge, dass der Ständer groß, schwer und materialintensiv ist. Die große Seitenfläche hat eine hohe Windlast bei Seitenwind zur Folge, da sie eine große Angriffsfläche bietet. Zwar ist es vorgesehen, den Ständer aus Blech zu fertigen, jedoch wird hierfür teures Profilblech eingesetzt.

Die Druckschrift DE 698 15 168 T2 (entspricht EP 0 857 926 B1) beschreibt eine Stützvorrichtung für ein Solarpaneel. Auch diese ist einteilig aufgebaut, dadurch groß und materialintensiv. Vorgesehen ist die Fertigung mittels PE-Spritzguss oder Vakuumformung. Zur Befestigung des Paneels sind gesonderte Sicherungsmittel, insbesondere Schrauben, erforderlich. Dadurch sind Herstellung und Montage teuer und aufwändig.

Ein stapelbares Flachdach-/ Bodengestell für Solarpaneele wird in der Druckschrift DE 10 2007 045 553 A1 beschrieben. Dieses weist zwar einzelne Auflagevorsprünge auf, ist aber einteilig und daher groß und materialintensiv, vor allem durch den nichttragenden Verbindungsbereich zwischen den Auflagevorsprüngen.

Nach der Druckschrift DE 10 2009 056 318 A1 ist ein Solarpaneel-Träger bekannt, der eine Wanne für Schüttgut zur Beschwerung vorsieht und für eine werkzeuglose Montage ausgebildet ist. Allerdings resultiert ein hoher Herstellungs- und Montageaufwand durch mehrteilige Gestellelemente (als Befestigungsmittel bezeichnet).

Die Druckschrift DE 20 2011 050 810 U1 bietet ein Stützelement für eine Unterkonstruktion für ein Solarmodul an. Hierbei sind Befestigungsschienen als Einzelelemente vorgesehen, von denen immer ein Paar benötigt wird. Die Befestigungsschienen sind aus rechteckigem Rohrprofil gefertigt. Es sind Ausnehmungen zur Befestigung durch Schrauben (in Nutenstein im C-Profil geschraubt) oder Klemmkörper (aber auch Klemm- und Spreizbefestigung vorgesehen). Die Befestigungsschiene wird durch Schrauben am Boden oder an einer Lattung befestigt. Das Rohrprofil bietet wenig Spielraum für eine statisch vorteilhafte Konstruktion, ist zudem teuer und schwer. Die Montage mittels Verschraubung ist mit hohem Montageaufwand verbunden.

Die Druckschrift WO 2009/077030 A1 beschreibt einen Träger für ein Solarpaneel, der so ausgebildet ist, dass er den Wind leitet. Der Träger ist jedoch sehr groß, wodurch sich der Aufwand für Transport und Montage erhöhen sowie ein hoher Materialeinsatz erforderlich ist. Zudem sind gesonderte Befestigungselemente erforderlich, die am Paneel angreifen und dieses mit dem Träger verbinden. Die Verbindung der Träger untereinander kann nur durch Kopplung geschehen, es ist kein stabilisierendes Trägergerüst vorgesehen.

Gegenstand der Druckschrift WO 2010/054795 A1 ist ebenfalls ein Träger für ein Solarpaneel. Es weist eine voluminöse Schale auf, die einteilig ausgebildet, dadurch groß und materialintensiv sowie nicht leicht zu transportieren ist. Erforderliche Befestigungsmittel klemmen das Solarpaneel gegen die Stützflächen.

In der Druckschrift DE 201 20 983 U1 wird eine Ständeranordnung für ein Solarpaneel beschrieben, wobei ein erster Ständer und ein zweiter Ständer vorgesehen sind, die jeweils aus einem zweidimensionalen Zuschnitt der äußeren Kontur, der biegegeschwächte Faltlinien aufweist, mittels Faltung ausbildbar und mit einem Modulrahmen des Solarpaneels verbindbar sind.

Auch die Druckschrift DE 10 2010 017 705 A1 offenbart so eine Ständeranordnung.

Angesichts der Unzulänglichkeiten des Stands des Technik ist es die Aufgabe der Erfindung, eine Ständeranordnung für ein Solarpaneel anzubieten, die kostengünstig herzustellen und einfach zu transportieren ist, eine hohe Stabilität gewährleistet und einfach, schnell und kostengünstig montierbar ist. Aufgabe ist es weiterhin, Verfahren zur einfachen Montage und zur kostengünstigen Herstellung der Ständeranordnung anzubieten.

Die Aufgabe der Erfindung wird gelöst durch eine Ständeranordnung gemäß Anspruch 1.

Mit zwei separaten Ständern wird die Eigensteifigkeit des Modulrahmens genutzt, um eine stabile Gesamtkonstruktion zu erreichen. Zudem ist der Materialeinsatz minimiert und die Angriffsfläche für den Wind ist sehr klein.

Die Auslieferung der zweidimensionalen Zuschnitte, die erst unmittelbar vor der Verwendung aufgerichtet werden, ermöglicht einen kostengünstigen Transport, da das Volumen minimal ist. Sowohl das Aufrichten der Zuschnitte zu den fertigen Ständern, als auch die Montage auf die Schiene und die Verbindung mit den Modulrahmen erfolgen werkzeugfrei. Dadurch werden Kosten gespart und die Flexibilität erhöht.

Der erste Ständer und der zweite Ständer sind mit einander zugewandten Frontseiten gemeinsam und beabstandet zueinander auf der einen dreiseitig geschlossenen Profilquerschnitt mit Auskragungen in die offene Seite hinein aufweisenden Unterkonstruktion montierbar. Die Unterkonstruktion ist vorzugsweise als eine Schiene ausgebildet und nachfolgend als solche bezeichnet, ohne dass die Erfindung hierauf beschränkt wäre. Eine weitere Ausführungsform der Schiene besteht aus zwei miteinander verbundenen U-Profilen. Die Ständer sind jeweils einteilig ausgebildet, weisen im Wesentlichen dreieckige seitliche Giebelflächen und eine annähernd U-förmige Front- und Rückseite auf, die von Schenkeln, die einen annähernd U-förmigen Querschnitt mit sich zur Frontseite öffnendem U aufweisen und einer Grundplatte gebildet werden.

Andere Positionen und Ausrichtungen sind im Rahmen des erfindungsgemäßen Prinzips vorgesehen. So kann sich beispielsweise bei einer alternativen Ausführungsform die U-Form der Schenkel zur Rückseite hin öffnen oder die Ständer mit den Rückseiten zueinander ausgerichtet montiert. Alternativ ist eine andere, beispielsweise eine V-Form der Schenkel vorgesehen. Auch die Gestalt der Giebelflächen ist variierbar, ohne das erfindungsgemäße Konzept zu verlassen.

Es hat sich als vorteilhaft erweisen, wenn die Faltlinien, die die Verbindung der Schenkel mit der Grundplatte markieren, nicht parallel zueinander verlaufen. Dadurch wird eine verbesserte Festigkeit bei Belastungen parallel zur Ebene der Grundplatte gewährleistet, da immer wenigstens ein Schenkel eine hohe Steifigkeit aufweist. Würden sie parallel aufgerichtet, ergäbe sich bei seitlicher Belastung nur ein geringes statisches Widerstandsmoment. Zudem stehen nach dem Aufrichten der Schenkel die Verriegelungslaschen bereits in der korrekten Position federnd von der Grundplatte ab.

Weitere Vorteile ergeben sich, wenn die Ständer an der Grundplatte ausgebildete Rastnäpfe sowie Verriegelungslaschen aufweisen, die so beschaffen sind, dass sie in Auskragungen und Gegenelemente der Schiene eingreifbar sind, und wobei der Ständer weiterhin von der Grundplatte weg weisende Schenkel mit an dem von der Grundplatte wegweisenden Ende des Schenkels angeordneten Auflagen, auf die der Modulrahmen auflegbar ist, und Ausnehmungen, die in den Modulrahmen des Solarpaneels in der Weise eingreifbar ausgebildet sind, aufweist, dass die Ständeranordnung mit der Schiene und dem Modulrahmen eine steife Verbindung bildet, und wobei eine Verdrehsicherung des Ständers vorgesehen ist, die zwei innere Haltelaschen, die an der Auskragung der Schiene an der Innenseite des Querschnittsprofils angreifbar ausgebildet sind, und zwei Endlagensicherungslaschen, die an der Außenwand der Schiene angreifbar ausgebildet sind, aufweist.

Durch die Rastnäpfe, insbesondere durch die daran angeordneten Nuten, ist eine einfache Montage möglich, da der Ständer nach dem Einführen in das Profil der Schiene einfach in deren Auskragungen eindrückbar ist. Die Auflagen an den Enden der Schenkel erleichtern zunächst die Montage, da das Solarpaneel bei der Montage dort abgelegt wird, während die Ständer in die Endposition verschoben werden. Letztlich bieten die insgesamt acht Auflagen auf vier Schenkeln nach erfolgter Montage dem Solarpaneel zusammen mit den ebenfalls acht Ausnehmungen und Haken einen sicheren Halt.

Neben der Verdrehsicherung bieten die inneren Haltelaschen auch eine Sicherung gegen vertikale Lasten. Diese Haltelaschen weisen im montierten Zustand eine formschlüssige Verbindung zwischen Schiene und Ständer auf, da sich zwischen Grundplatte und Haltelasche ein Schlitz bildet, in den die Ausnehmung der Schiene bei der Montage hineingleitet.

In einer alternativen Ausführungsform weisen die Ausnehmungen der Schenkel ein längs zu seiner Achse geschlitztes rohrförmiges Element auf, das zumindest beide Wände eines Schenkels verbindend in die Ausnehmungen eingebracht ist und der Schlitz in dem rohrförmigen Element der Aufnahme des Modulrahmens dient. Bevorzugt ist ein Rundprofil mit Längsschlitz, beispielsweise ein geschlitztes Rohr oder aus Blech gerollt, vorgesehen, das in entsprechend dem Rundprofil aufgeweiteten Ausnehmungen der Schenkel wenigstens eines der Ständer formschlüssig verankert ist. Damit sind die Schlitze in ihrer vorgegebenen Neigung nicht mehr auf einen bestimmten Bereich der Neigung der Modulrahmen, z.B. durch den Höhenunterschied zwischen dem ersten und dem zweiten Ständer bedingt, begrenzt, sondern universell einsetzbar. Ein Rundprofil würde sich mit seinem Schlitz in den jeweils erforderlichen Winkel drehen oder auch ein nicht drehbares Rundprofil entsprechende Flexibilität bieten. Zusätzlich würden durch diese Rundprofile die Ständer zusätzlich stabilisiert sowie die Solarpaneele gegen seitliche Belastung gesichert. Eine vorteilhafte Ausführungsform in Edelstahl sorgt für eine verbesserte galvanische Trennung.

Als sehr vorteilhaft hat es sich erwiesen, wenn die vertikal zur Ebene des zweidimensionalen Zuschnitts eingeprägten Rastnäpfe eine horizontale Nut aufweisen, die zum Eingreifen in die Auskragung an der Innenseite des Querschnittsprofils der Schiene ausgebildet ist. Damit bilden sich zwei weitere Fixierungspunkte des Ständers gegenüber der Schiene, der dann mit vier Punkten vertikal gesichert ist. Er ist somit kipp- und verdrehsicher formschlüssig mit der Schiene verbunden.

Bevorzugt sind die Gegenelemente der Schiene zum Zusammenwirken mit den Verriegelungslaschen zumindest teilweise als Langlöcher oder als in den inneren Querschnitt der Schiene hineinragende Nasen ausgebildet, und wobei die Verriegelungslaschen in der Weise ausgebildet sind, dass sie beim Zusammenwirken mit den Gegenelementen eine Längsbewegung des Ständers entlang der Schiene in einer ersten Richtung von dem anderen Ständer weg zulassen und in einer zweiten Richtung zu dem anderen Ständer hin blockieren. Die federnden, aus dem Profil der Grundplatte des fertig aufgerichteten Ständers abragenden Verriegelungslaschen wirken dabei wie Widerhaken, die in einer Richtung beweglich sind, in der anderen aber blockiert. Somit lassen sich die Ständer zwar leicht in die Montageposition bringen und mit dem Modulrahmen verspannen, jedoch nicht mehr ohne weiteres lösen.

Besonders vorteilhaft für die Stabilität der Ständeranordnung ist es, wenn die Endlagensicherungslaschen in ihrer montierten Position in der Weise an der Außenwand der Schiene angreifen, dass das Profil der Schiene am Aufspringen gehindert wird. Somit wird das offene Profil geschlossen, indem die offene Seite mit einer Klammer versehen wird. Diese Klammer wird gebildet durch die Grundplatte und die beiderseits der Schiene herunterragenden Endlagensicherungslaschen. Die Lasche ist zwar leicht zu biegen, hat aber in der Belastungsrichtung wegen des hohen Profils eine hohe Steifigkeit. Somit hat die Klammer insgesamt eine hohe Steifigkeit und hält die Schiene auch bei Belastung sicher zusammen.

Weitere Vorteile ergeben sich, wenn an der zum zweiten Schenkel des Ständers hin weisenden inneren Schenkelflanke des ersten Schenkels an ihrem zur Grundplatte hin weisenden Ende ein trapezförmiges Verspannelement, das sich zur Schenkelflanke hin verjüngt, ausgebildet ist, das im aufgerichteten Zustand des Ständers in eine trapezförmige Ausnehmung in der Grundplatte, die sich zu den Schenkeln hin verjüngt, einführbar und nach dem Einführen in der Weise umklappbar ist, dass der Schenkel gegen die Grundplatte gezogen und dort fixiert wird. Das erfolgt insbesondere auch durch Umlegen und Drücken der an der Grundplattenrückseite befindlichen Klappe zwischen die inneren Schenkelflanken. Diese werden in den trapezförmigen Ausnehmungen der Grundplatte zu den äußeren Schenkelflanken hin bewegt. Diese Klappe als weiteres Verspannelement bewirkt zusammen mit der Ausnehmung in der Grundplatte eine besonders hohe Steifigkeit. Diese wird erreicht, obwohl Schenkel und Grundplatte - bis auf eine Linie - keine feste Verbindung miteinander aufweisen. Zudem verspannt das Umlegen der Klappe ganz am Schluss der Montage den gesamten Ständer in der Weise gegen den Modulrahmen, dass auch Toleranzen im Rahmen ausgleichbar sind und stets ein sicherer, spielfreier Aufbau gewährleistet ist.

Eine Ausführungsform sieht vor, dass der erste Ständer für die bezüglich des Untergrundes niedrigere Position und der zweite Ständer für die bezüglich des Untergrundes höhere Position des gegenüber dem Untergrund in geneigter Position montierten Solarpaneels vorgesehen ist. Bevorzugt weisen die Auflagen dann einen entsprechende Neigung auf. Durch die Variation der Ständerhöhen ist ebene oder unterschiedliche geneigte Photovoltaikanlagen errichtbar.

Vorteilhaft ist es, wenn die biegegeschwächten Faltlinien des zweidimensionalen Zuschnitts durch zumindest abschnittsweise Lochung oder Perforation erzeugt werden. Eine Lochung oder Perforation ist durch Stanzen leicht herstellbar und zudem ohne weiteres leicht erkennbar, so dass sie eine Hilfe bei der manuellen Montage bieten. Ungeachtet dessen sind alternative Möglichkeiten zur Herstellung der Biegelinien vorgesehen. Beispielsweise kann das Material in seiner Dicke oder Festigkeit vermindert werden, in dem es gedrückt, gerollt oder abgetragen wird.

Günstig ist es auch, wenn der zweidimensionale Zuschnitt aus einem korrosionsgeschützten Metallblech besteht. Andere flächige Materialien, wie z.B. Kunststoffplatten, sind jedoch als Alternativen vorgesehen. Voraussetzung ist, dass sie leicht zu schneiden sind und dass auch Tiefziehvorgänge möglich sind. Zudem muss die plastische Verformung mit minimalem Rücksprungverhalten unter Normalbedingungen möglich sein. Metall ist in dieser Hinsicht optimal, weist zudem eine hohe Festigkeit auf und ist relativ preisgünstig verfügbar. Ein Korrosionsschutz ist bei Errichtung im Außenbereich erforderlich, um eine lange Lebensdauer zu sichern, sofern korrosionsanfälliges Material zu Einsatz kommt.

Bei einer vorteilhaften alternativen Ausführungsform weist wenigstens ein Ständer ein Versteifungselement auf, das in Ausnehmungen in den Schenkeln diese verbindend einsetzbar ist. Hierdurch wird die Steifigkeit, besonders bei hohen Ständern verbessert, ohne dass ein festeres oder stärkeres Material eingesetzt werden muss. Auch eine erhöhte Festigkeit des gesamten Photovoltaikanlage kann durch Einsatz der Versteifungselemente erreicht werden, beispielsweise an exponierter Stelle mit erhöhter Windbelastung. Die Versteifungselemente bieten außerdem die Möglichkeit, in ihrem Profil Kabel aufzunehmen, so dass eine geschützte und sichere Kabelführung möglich wird.

Die Aufgabe der Erfindung wird ebenfalls gelöst durch ein Verfahren zur Montage einer Ständeranordnung für ein Solarpaneel mit den folgenden Verfahrensschritten:
1. Biegen der inneren Schenkelflanke des ersten Ständers entlang der Faltlinien und Aufrichten der Schenkel, insbesondere in einem durch die Zuschnittgeometrie vorgegeben Winkel ≠ 90°, in Bezug zu der Grundplatte. Die Ständer bestehen im Anlieferungszustand vor Beginn des Montagevorgangs aus ebenem, perforiertem, ungebogenem, bevorzugt mit Rostschutz versehenem Flachmaterial, beispielsweise verzinktem Blech, das unmittelbar vor Beginn der Montage, beispielsweise auf der Baustelle, von Hand zum fertigen Ständer gebogen wird. Das Biegen und das Ausbilden einer klaren Biegekante mit minimalem Radius wird erleichtert durch eine vorgefertigte, entsprechend geschwächte Biegekante. Dies erfolgt beispielsweise durch Perforation, indem Löcher in Abständen entlang der Biegelinie eingebracht werden, oder durch anderen Materialschwächungen, z.B. durch Drücken des Zuschnitts im Bereich der Biegelinie, so dass die Materialstärke bzw. -festigkeit abnimmt.
   Die Aufstellung der Schenkelflanke in einem Winkel ≠ 90°, bevorzugt einem stumpfen Winkel, in Bezug zu der Grundplatte führt zu einer erhöhten Stabilität der Schenkel bei seitlicher Belastung. Die Schenkel bilden ein statisch stabiles Lastdreieck aus. Außerdem wird bei einem Winkel verschieden von 90° das Umklappen des Solarpaneels bei Einwirkung seitlicher Kräfte verhindert. Zudem weist jeder Schenkel zwei Flanken, die Schenkelflanken, auf, von denen jeder am seinem oberen, von der Grundplatte abgewandten Ende einen Haken ausbildet. Durch die zwei Haken, unter denen eine Ausnehmung ausgebildet ist, wird der Ständer fest mit den Modulrahmen verankert, wodurch wiederum die Ständeranordnung auch ohne zusätzliche Stabilisierung bereits sehr unempfindlich gegen seitliche Bewegung wird. Nach der Montage weist die gesamte Anordnung eine hohe Biegesteifigkeit auf, die zusätzlich zur Schrägstellung der Schenkelflanke, z.B. in einem Winkel von 20°, wirkt. Bevorzugt erfolgt eine Stabilisierung in Süd-Nord-Richtung, aber auch in Ost-West-Richtung.
2. Falten der Seitenbleche der Schenkel zu einem Profil, beispielsweise einer angenäherten U-Form, bevorzugt einer offenen Trapezform mit Öffnung zur Frontseite hin, wobei die Trapezform dem Schenkel eine erhöhte Stabilität verleiht im Unterschied zu exakten U-Form.
3. Einführen der trapezförmigen Verspannelemente der Schenkel in die trapezförmigen Ausnehmungen der Grundplatte, die damit für das spätere Umlegen der Klappe und der damit verbundenen Fixierung (vgl. Verfahrensschritt 11) am Schluss des Montagevorgangs bereit sind.
4. Aufsetzen des Ständers in so weit um eine vertikale Achse gedrehter Position auf horizontale die Schiene, dass die inneren Haltelaschen und die Verriegelungslaschen an der Grundplatte in das Querschnittsprofil der Schiene einführbar sind. Anderenfalls würde, da die Verriegelungslaschen seitlich nach außen von der Grundplatte wegstehen, keine Montage möglich sein. Die vertikale Achse verläuft dabei senkrecht zu der Grundplatte, während sich die Schiene horizontal, auf der Ebene ihrer größten Ausdehnung erstreckt.
5. Rückdrehen des Ständers in Normalposition mit Front- und Rückseite der Ständer längs zur Schiene ausgerichtet, so dass die inneren Haltelaschen die Auskragung im Querschnittsprofil der Schiene umfassen und die Verriegelungslaschen in die jeweils vorgesehenen Gegenelemente eingreifen. Die inneren Haltelaschen, bevorzugt an der Rückseite der Grundplatte des Ständers angeordnet, bilden zusammen mit den Schenkelflanken eine sich zwischen beiden Elementen ersteckende Nut. Diese Nut wird auf die Auskragung im Querschnittsprofil der Schiene aufgeschoben, so dass der Ständer auf beiden Seiten der Grundplatte mit der Schiene formschlüssig verbunden und vertikal verriegelt ist.
6. Aufdrücken des Ständers auf die Schiene, so dass die bevorzugt an der Frontseite der Grundplatte des Ständers angeordneten Rastnäpfe in das Querschnittsprofil der Schiene eingleiten bzw. einsinken und deren Auskragung in die horizontale Nut der Rastnäpfe einrastet. Dabei wird die Schiene kurzzeitig auseinandergedrückt. Danach ist auch hier eine formschlüssige Verbindung zwischen Schiene und Ständer erreicht. Der Ständer ist an der Front- und an der Rückseite vertikal verriegelt.
   Mit Vollendung der Verfahrensschritte 5 und 6 kann der Ständer nicht mehr auf der Schiene gedreht werden und ist zusätzlich vertikal mit der Schiene verankert. Die Verriegelungslaschen greifen in die in der Schiene eingebrachten Langlöcher, alternativ auch Nasen oder andere Elemente, die ein Einhaken der Verriegelungslaschen ermöglichen. Damit kann der Ständer nur noch in eine Richtung entlang der Schiene bewegt werden. In dieser Weise wird der erste Ständer bis zu seiner vorgesehenen Position bewegt.
7. Montage des zweiten Ständers in derselben Weise wie sie beim ersten Ständer erfolgt ist, so dass beide Ständer mit einander gegenüberliegenden Frontseiten auf der Schiene voneinander weg, also gegenläufig verschiebbar montiert sind. Dann werden die beiden Ständer in einen solchen Abstand zueinander gebracht, dass der Modulrahmen des Solarpaneels auf die Auflagen aufgelegt werden kann und sich auch noch über die die Ausnehmungen bildenden Haken der Schenkel der beiden Ständer stülpen lässt. Dieser Montageschritt kann durch ein Distanzstück erleichtert werden.
8. Aufsetzen des Solarpaneels mit seinem Modulrahmen auf die Auflagen der Schenkel und Einführen in die Ausnehmungen oder Schlitze. Hierzu wird die Unterseite des Modulrahmens auf die Ablage des ersten Ständers abgelegt. Dadurch befindet sich die Unterseite des Modulahmens direkt vor den Ausnehmungen der Schenkel, in einer bevorzugten Ausgestaltung den Schlitzen, unter beiden Haken des ersten Ständers. Durch Ziehen des Modulrahmens zum zweiten Ständer hin wird die Unterseite des Rahmens in die Ausnehmung oder den Schlitz unter dem Haken bis zum Anschlag eingeführt. In Endlage lässt sich der Modulrahmen am hinteren Ende über die Haken des zweiten Ständers stülpen und auf der Ablage ablegen.
9. Ziehen wenigstens eines Ständers vom anderen weg, so dass der Modulrahmen bis zum Anschlag in die Ausnehmungen oder Schlitze eindringt und die Ständer mit dem Modulrahmen verspannt sind. Bevorzugt wird der zweite Ständer so weit vom ersten Ständer weggezogen, bis die Unterseite des Modulrahmens auch hier bis zum Anschlag in die Ausnehmungen oder Schlitze der Haken des zweiten Ständers eingeführt ist. Die Ständer sind danach gegeneinander verriegelt und lassen sich nicht weiter ziehen. Durch das Eingreifen der Verriegelungslaschen in die in der Schiene befindlichen Gegenelemente, bevorzugt Langlöcher, können die Ständer sich nicht mehr aufeinander zu bewegen. Das Solarpaneel ist fixiert. In vorteilhafter Weise ist dadurch eine Montage ohne Werkzeuge und ohne zusätzliche Verbindungselemente möglich.
10. Umlegen der Klappe, die zwischen die inneren Schenkelflanken gedrückt wird, und sicheres Verspannen der Schenkel gegen die Grundplatte jedes der Ständer und des Modulrahmens gegen die Auflage. Dabei wird die innere Flanke des Schenkels nach unten gezogen, da die sich verjüngende Trapezform der Ausnehmung dies ermöglicht. Damit erfolgt eine Fixierung des Aufbaus.
   Auf diese Weise verkanten die beiden Ausnehmungen oder Schlitze an der Oberseite der Schenkel beider Ständer gegen den Modulrahmen, der dadurch nicht nur fixiert, sondern auch ohne Spiel und mit einer leichten Spannung mit jedem Schenkel formschlüssig verbunden und fixiert ist. Hieraus resultiert ein weiterer Vorteil, da sich aus der festen Verbindung von Modulrahmen und Schenkel wesentliche Stabilitätsvorteile der gesamten Befestigung ergeben. Zudem können Toleranzen im Modulrahmen, die ohne diese Lösung zu einer mangelnden Fixierung führen würden, ausgeglichen werden.
11. Umklappen der Endlagensicherungslaschen, bis sie etwa senkrecht von der Grundplatte abstehen und beidseits der Schiene an deren Außenwänden angreifen. Die Grundplatte des Ständers weist hierzu zwei von Hand zu betätigende Klappen, die Endlagensicherungslaschen, auf, die durch die Grundplatte hindurch heruntergeklappt das Auseinanderdrücken der Schiene vermindern und so die im Langloch oder auf den Nasen der Schiene eingreifende Verrieglung sowie auch die eingerasteten Rastnäpfe in ihrem Halt zu sichern.

Als zusätzliche Stabilisierung ist es für eine bevorzugte Ausführungsform vorgesehen, in die beiden Schenkel des zweiten Ständers ein Versteifungselement, das bevorzugt als U-Profil ausgebildet ist, formschlüssig oder als Presspassung einzuklinken. Dies trägt zur Stabilisierung der Modulrahmen bei seitlicher Belastung bei und kann gleichzeitig auch noch als Kabelkanal dienen. Die zusätzliche Stabilisierung kommt insbesondere dann zu Einsatz, wenn es sich um Ständer mit unterschiedlicher Höhe handelt. Zudem ermöglicht die zusätzliche Stabilisierung die Ausführung des Ständers in Leichtbau, einhergehend mit zusätzlicher Materialeinsparung. Zudem wird eine etwaige Neigung der gesamten Photovoltaikanlage, bei angreifendem Wind in Schwingungen zu geraten, vermindert.

Durch die Länge der Schiene, die durch Adapterelemente über die gesamte Länge der PV-Anlage verbind- und verlängerbar ist, deren Ausdehnung quer zur Aufstellrichtung der Modulreihen und die Eigensteifigkeit der annährend U-förmigen, bevorzugt offen trapezförmigen Elemente der Schiene wird die Auflast von mehreren Reihen ausgeglichen, was die notwendige Beschwerung minimiert. Eine eventuell dennoch erforderliche Beschwerung kann in die offene Schiene als Schüttgut eingefüllt werden. Alternativ ist vorgesehen, dass die Adapterelemente so schwer ausgebildet sind, dass sie neben der Adaptierung bzw. Verbindung zusätzlich als Beschwerungselement dienen.

Die Aufgabe der Erfindung wird weiterhin gelöst durch ein Verfahren zur Herstellung einer Ständeranordnung gemäß Anspruch 12.

Es hat sich dabei als ganz besonders vorteilhaft erwiesen, wenn die Ausbildung der horizontalen Nut der Rastnäpfe durch dem Tiefziehen der Rastnäpfe vorangehende Lochung im Bereich der späteren Nut, deren Längsausdehnung definierend, hervorgerufen wird. Die Lochung bewirkt, dass beim Tiefziehen das Material in einer solchen Weise aus dem Rastnapf ausreist, dass ein solches Element hervorgerufen wird, das eine Nut bildet. Somit kann auf besonders einfache Weise ein horizontal wirkendes Element erzeugt werden, ohne dass aber ein horizontal wirkendes Werkzeug hierfür eingesetzt werden muss. Die sehr kostengünstige Fertigung erfolgt insgesamt in nur einer Aufspannung ausschließlich durch vertikale Stanzvorgänge.

Die erfindungsgemäße Ständeranordnung ist sehr kostengünstig in Herstellung und bei der Montage, da die Ständer werkzeugfrei montierbar und mit der Schiene verbindbar sind. Da die Halterung des Modulrahmens ausschließlich unterhalb dessen vorgenommen wird, können die Schlitze zur Beabstandung zwischen den Modulrahmen in Längsrichtung auf den für die Dehnung erforderlichen Mindestabstand reduziert werden.

Als weiterer Vorteil ist auch ein Diebstahlschutz zu nennen, da die ungewöhnliche Montage nicht mittels herkömmlicher Werkzeuge lösbar ist. Damit werden Diebe, die die Solarpaneele stehlen wollen, an einer schnellen Demontage gehindert und geben möglicherweise ihr Ansinnen auf.

Weiterhin sind mit der erfindungsgemäßen Ständeranordnung unterschiedliche Positionen der Solarpaneele gegenüber dem Untergrund, beispielsweise dem Dach, separat einstellbar. Jedes Solarpaneel kann einzeln gelagert werden. In dem Fall muss jeder Ständer individuell unterschiedliche Abmessungen aufweisen. Dies stellt aber nach dem Stand der Technik kein Problem dar, weil derartige Varianten leicht als CAD-File erstellt und direkt in die Fertigung auf einem entsprechend geeigneten Stanzautomaten gegeben werden können.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen:
- Fig. 1:: schematisch eine perspektivische Ansicht einer Photovoltaikanlage mit einer Ausführungsform der erfindungsgemäßen Ständeranordnung;
- Fig. 2:: schematisch eine perspektivische Ansicht einer Ausführungsform der erfindungsgemäßen Ständeranordnung;
- Fig. 3:: schematisch eine Draufsicht auf den Zuschnitt einer Ausführungsform eines erfindungsgemäßen Ständers;
- Fig. 4:: schematisch eine perspektivische Ansicht einer Ausführungsform eines erfindungsgemäßen Ständers;
- Fig. 5:: schematisch eine perspektivische Ansicht einer weiteren Ausführungsform eines erfindungsgemäßen Ständers; und
- Fig. 6:: schematisch eine perspektivische Ansicht von unten eines Details einer Ausführungsform der erfindungsgemäßen Ständeranordnung.

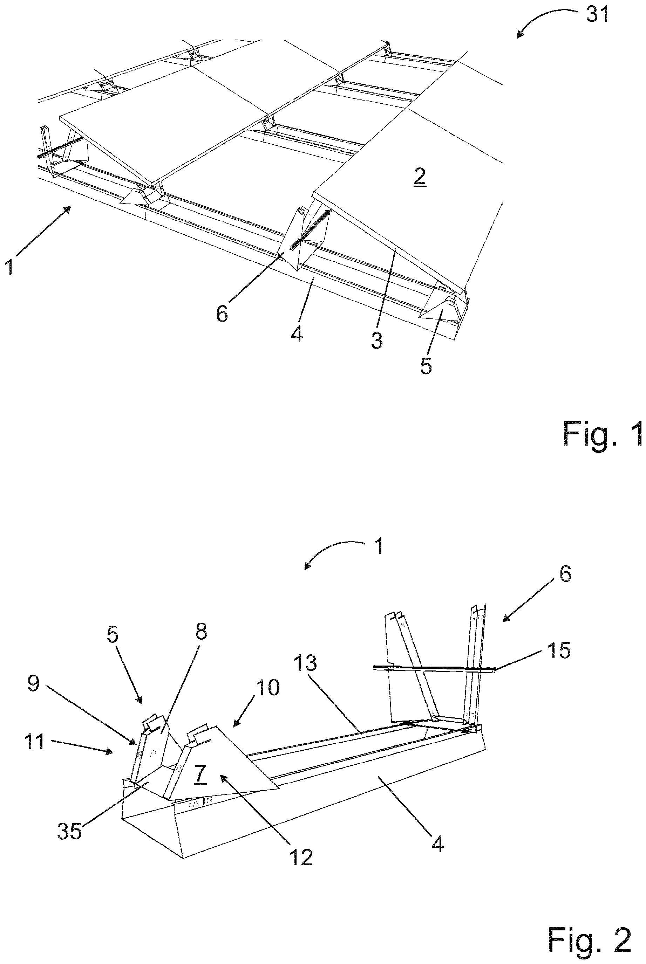

Fig. 1 zeigt schematisch eine perspektivische Ansicht einer Photovoltaikanlage 31 mit einer Ausführungsform der erfindungsgemäßen Ständeranordnung 1. Die Solaranlage 31 ist auf einem ebenen Untergrund, beispielsweise auf einem flachen oder leicht angeschrägten Dach angeordnet. Die Solarpaneele 2, umfasst und stabilisiert von Modulrahmen 3, stützen sich dabei auf die erfindungsgemäße Ständeranordnung 1, bestehend aus einem ersten Ständer 5, einem zweiten Ständer 6 und einer Schiene 4. Durch die Verbindung von Elementen der Schiene 4 sowie den die Längsverbünde der Schiene 4 verbindenden Solarpaneele 2 lassen sich gemäß der Erfindung Photovoltaikanlagen 31 von unbegrenzter Ausdehnung erstellen.

Fig. 2 zeigt schematisch eine perspektivische Ansicht einer Ausführungsform der erfindungsgemäßen Ständeranordnung 1 mit der Schiene 4, die in der bevorzugten Ausführungsform als offenes Profil mit an der offenen Seite angeordneten Auskragungen 13 ausgeführt ist, die beidseits über die Profilöffnung ragt. Das nach oben im Wesentlichen offene Profil ist geeignet, ein Gewicht zur Beschwerung der Photovoltaikanlage aufzunehmen, hierzu beispielsweise mit einem Schüttgut ausgefüllt zu werden. Bevorzugt wird die Schiene 4 aus einem korrosionsgeschützten, beispielsweise verzinken Blech hergestellt.

Auf der Schiene 4 angeordnet ist der zweite Ständer 6, der in der dargestellten Ausführungsform mittels eines Versteifungselements 15 versteift ist, das als offenes U-Profil ausgeführt zusätzlich der Kabelführung dienen kann.

Dem zweiten Ständer 6 gegenüber angeordnet ist der erste Ständer 5, hier im noch nicht vollständig montierten Zustand dargestellt. Mit seiner Frontseite 10 weist er zum zweiten Ständer 6 hin, während die Rückseite 11 von dem zweiten Ständer 6 abgewandt ist. Der erste Ständer 5 weist zwei Schenkel 7 auf, die mit den äußeren Schenkelflanken 9 gleichzeitig die Giebelflächen 12 bilden. Jeder Schenkel 7 weist eine innere Schenkelflanke 8 und eine äußere Schenkelflanke 9 auf, die in Bereich der Rückseite 11 durch einen nicht näher bezeichneten Stegbereich verbunden sind und somit zumindest annähernd, in der dargestellten Ausführungsform exakt ein U-Profil ausbilden. Bei einer Ausführungsform mit V-Profil anstelle des U-Profils ist kein Stegbereich vorhanden.

Die Schenkel 7 sind auf der Grundplatte 14 angeordnet, mit dieser einteilig verbunden und stehen von dieser annähernd senkrecht ab, wobei bevorzugt ein Winkel ungleich 90° im Interesse erhöhter Stabilität angestrebt wird.

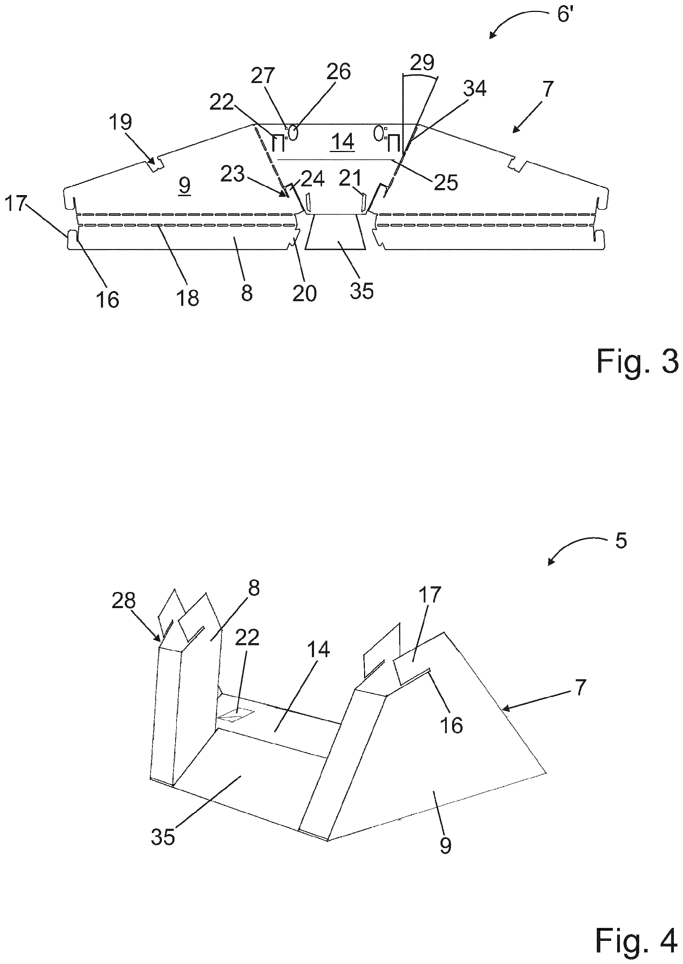

Fig. 3 zeigt schematisch eine Draufsicht auf den Zuschnitt 6' einer Ausführungsform eines erfindungsgemäßen Ständers. Der Zuschnitt wird aus einem flächigen Material, bevorzugt einem korrosionsgeschützten, beispielsweise verzinken Blech hergestellt.

Sinnvollerweise erfolgt in dem Fall das Aufbringen der Korrosionsschutzschicht erst nach der Bearbeitung, um die Schicht nicht durch die Bearbeitung zu zerstören. Im Interesse einer besonders kostengünstigen Herstellung wird der Zuschnitt 6' in einer einzigen Aufspannung gefertigt, ohne dass der Zuschnitt nochmals in eine weitere Bearbeitungsstation eingelegt werden müsste. Hierzu weisen alle tiefgezogenen und angeschnittenen Elemente in dieselbe Richtung.

Die Fertigung kann im Interesse höchster Flexibilität der Ausführung in einem programmierbaren Stanzautomaten erfolgen, der nach einer eingegebenen Konstruktionsdatei (CAD-File) arbeitet. Um preisgünstig hohe Stückzahlen herzustellen, ist es jedoch auch vorgesehen, den Zuschnitt in einem Schneidwerkzeug, beispielsweise einen Gesamt- oder Folgeschnittwerkzeug, herzustellen.

Der Zuschnitt 6' wird platzsparend in flacher Form zur Verwendung, beispielsweise an die Baustelle geliefert und bei der Montage dank der Perforationen 18, die hier in der dargestellten Ausführungsform die Biegelinien als Faltlinien 34 definieren, einfach aufgerichtet, um einen fertig auf die Schiene montierbaren Ständer zu erhalten.

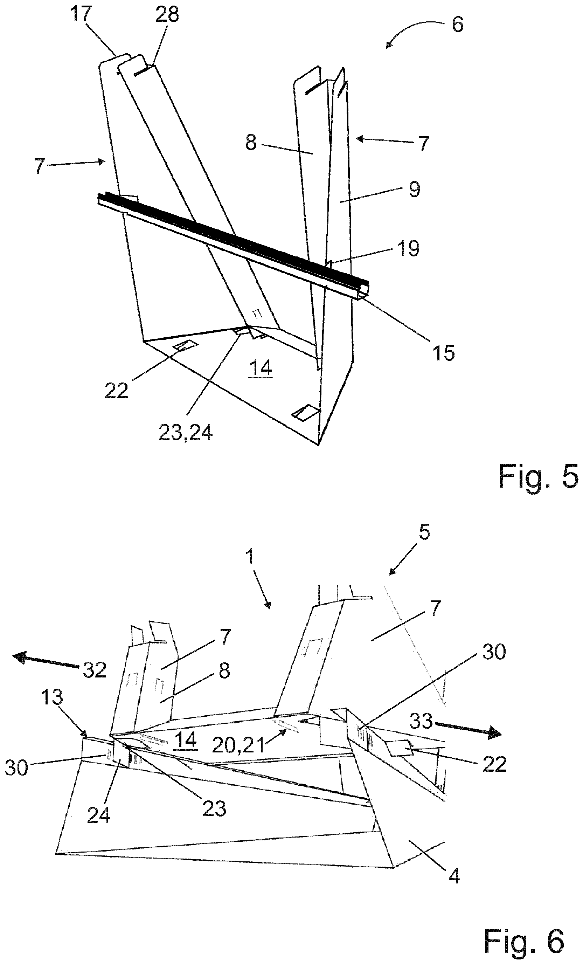

In Vorbereitung der späteren Funktion als Ständer 6 gemäß Fig. 5, dessen Zuschnitt hier beispielhaft dargestellt ist, weist dieser bereits alle notwendigen Elemente vorgefertigt auf. Dies sind die Haken 17 mit den Ausnehmungen 16 am von der Grundplatte 14 wegweisenden Ende der Schenkelflanken 8, 9. Die äußere Schenkelflanke 9 weist darüber hinaus die Ausnehmung 19 für das Versteifungselement 15, wie es in den Figuren 2 und 5 dargestellt ist, auf.

Am gegenüberliegenden Ende der inneren Schenkelflanke 8 ist das trapezförmige Verspannelement 20 angeordnet, das im zusammengefalteten Zustand des Ständers 6 in die trapezförmige Ausnehmung 21 der Grundplatte 14 eingreift. Die Grundplatte 14 weist zur Versteifung eine Sicke 25 auf. Sicken sind auch an anderen Bereichen des Zuschnitts vorgesehen.

Für die vertikale Arretierung des Ständers 6 dienen die inneren Haltelaschen 23 sowie die Rastnäpfe 26 mit ihren seitlichen Nuten, die in den Darstellungen nicht sichtbar sind. Sowohl die Haltelaschen 23, als auch die Nuten der Rastnäpfe 26 rasten formschlüssig an den Kanten der Auskragung der Schiene ein. Die Endlagensicherungslaschen 22 hingegen dienen der Sicherung des auf der Schiene montierten Ständers gegen Verdrehen sowie der Sicherung des offenen Profils der Schiene gegen dessen unerwünschtes Aufweiten bei Belastung.

Die ebenfalls vorgestanzten Verriegelungslaschen 24 dienen der Längsverriegelung der Ständer gegenüber der Schiene und sind einteilig mit den inneren Haltelaschen 23 verbunden.

Zur Herstellung der seitlichen Nuten an den Rastnäpfen 26 dient die bevorzugt aus zwei Löchern bestehende Lochung 27, die so gestaltet ist, dass beim nachfolgenden Tiefziehen eines Rastnapfes 26 sich die Nut zwischen den Lochungen 27 ausbildet.

Der Winkel 29 definiert die Schrägstellung der Schenkel 7 gegenüber der Achse der Schiene beim fertig montierten Ständer. Dieser Winkel beträgt zwischen 10 und 80°, bevorzugt 20°.

Fig. 4 zeigt schematisch eine perspektivische Ansicht einer Ausführungsform des erfindungsgemäßen ersten Ständers 5. Die Grundplatte 14 weist zwei von deren Ebene einseitig wegragende Schenkel 7 auf, von denen jeder über eine innere Schenkelflanke 8 und eine äußere Schenkelflanke 9 verfügt, die U-förmig miteinander verbunden sind. Am von der Grundplatte 14 weg weisenden Ende der Schenkel 7 ist eine Auflage 28 angeordnet, die zum Auflegen eines Modulrahmens während und nach erfolgter Montage geeignet ist. Weiterhin weisen die Enden der Schenkel 7 Ausnehmungen 16, hier bevorzugt als Schlitze ausgebildet, zum Einhängen des Modulrahmens auf, die von den Haken 17 überdeckt und in Zusammenwirken mit diesen gebildet werden.

Die Grundplatte 14 weist zudem Endlagensicherungslaschen 22 auf, die zur von den Schenkeln 7 weg weisenden Seite der Grundplatte 14 hin biegbar sind. Im ungebogenen Zustand erfüllen sie ihre Funktion als Verdrehsicherung und sie halten die Schiene soweit zusammen, dass sie gegen ein unerwünschtes Aufbiegen des offenen Profils geschützt wird. Ein solches Aufbiegen hätte anderenfalls zur Folge, dass die vertikale Arretierung durch die Rastnäpfe geöffnet und der Ständer nicht mehr an vier allen Punkten vertikal verriegelt wäre.

Fig. 5 zeigt schematisch eine perspektivische Ansicht einer weiteren Ausführungsform eines erfindungsgemäßen Ständers 6. Dieser weist ebenfalls von der Grundplatte 14 aus aufragende Schenkel 7 auf, die eine innere Schenkelflanke 8 und eine äußere Schenkelflanke 9 aufweisen und weiterhin an dem von der Grundplatte 14 wegweisenden Ende mit einer Auflage 28 und Haken 17 ausgestattet sind. Als Besonderheit dieser Ausführungsform ist in die Ausnehmung 19 der Schenkel 7 ein Versteifungselement 15 eingelegt. In die Grundplatte 14 vorbereitend eingeschnitten sind weiterhin die Endlagensicherungslaschen 22 sowie die innere Haltelaschen 23 und die Verriegelungslaschen 24.

Fig. 6 zeigt schematisch eine perspektivische Ansicht von unten eines Details einer Ausführungsform der erfindungsgemäßen Ständeranordnung 1. Mittels dieses Details wird ein entscheidender Montageschritt sichtbar, nämlich das Rückdrehen des verdreht auf die Schiene 4 aufgesetzten Ständers 5. Durch die Verdrehung lassen sich zunächst die Verriegelungslaschen 24 an den Auskragungen 13 vorbei in das Profil der Schiene 4 einsetzen. Beim Rückdrehen greifen die Auskragungen 13 in die Nut ein, die zwischen den inneren Haltelaschen 23 und der Grundplatte 14 gebildet wird, gebildet wird, ein. Dadurch kommt es zur vertikalen Verriegelung des hier dargestellten ersten Ständers 5. Die Funktion beim zweiten Ständer ist entsprechend.

Weiterhin greifen die Verriegelungslaschen 24, die federnd von der Grundplatte 14 aus in deren Ebene nach außen ragen, in die Gegenelemente 30 der Schiene 4 ein, die in der dargestellten Ausführungsform als Nasen ausgebildet sind. Alternativ sind jedoch auch andere Ausbildungen, beispielsweise vertikal ausgebildete Langlöcher, vorgesehen. Durch das Eingreifen der Verriegelungslaschen 24 in die Gegenelemente 30 wird eine Bewegung des Ständers 5 auf der Schiene 4 in Bewegungsrichtung 32 möglich, was zur Montage des Solarpaneels notwendig ist, während die Bewegung in der Blockierrichtung 33 verhindert wird. Damit kann sich das einmal auf einfache Weise montierte Solarpaneel nicht mehr lockern.

Weiterhin sichtbar sind die Endlagensicherungslaschen 22, die hier bereits heruntergeklappt sind und damit die Schiene 4 am Auseinanderbiegen hindern.

Das trapezförmige Verspannelement 20, am unteren Ende der inneren Schenkelflanke 8 des Schenkels 7 ausgebildet, ragt durch die trapezförmige Ausnehmung 21 hindurch und erscheint sichtbar an der Unterseite der Grundplatte 14. Zum Abschluss der Montage wird die Klappe 35 umgelegt, zwischen die inneren Schenkelflanken gedrückt und die gesamte Ständeranordnung 1 verspannt und fixiert.

Im Interesse einer besonders hohen Stabilität ist die Schiene 4 in der bevorzugten Ausführungsform nicht als herkömmliches U-Profil, sondern mit einem offenen trapezförmigen Querschnitt ausgebildet. Durch den verbreiterten Fußbereich wird auch die Druckbelastung, die auf den Untergrund wirkt, verringert.

### Bezugszeichenliste

- 1: Ständeranordnung
- 2: Solarpaneel
- 3: Modulrahmen
- 4: Schiene
- 5: erster Ständer
- 6: zweiter Ständer
- 6': Zuschnitt zweiter Ständer
- 7: Schenkel
- 8: innere Schenkelflanke
- 9: äußere Schenkelflanke
- 10: Frontseite
- 11: Rückseite
- 12: Giebelfäche
- 13: Auskragung
- 14: Grundplatte
- 15: Versteifungselement
- 16: Ausnehmung
- 17: Haken
- 18: Perforation
- 19: Ausnehmung Versteifungselement
- 20: trapezförmiges Verspannelement
- 21: trapezförmige Ausnehmung
- 22: Endlagensicherungslasche
- 23: innere Haltelasche
- 24: Verriegelungslasche
- 25: Sicke
- 26: Rastnapf
- 27: Perforation
- 28: Auflage
- 29: Winkel
- 30: Gegenelement
- 31: Photovoltaikanlage
- 32: Bewegungsrichtung
- 33: Blockierrichtung
- 34: Faltlinie
- 35: Klappe

## Patentansprüche

1. Ständeranordnung für ein Solarpaneel, wobei ein erster Ständer (5), ein zweiter Ständer (6) und eine Schiene (4) vorgesehen sind, wobei die Ständer (5, 6) jeweils aus einem zweidimensionalen Zuschnitt (6') der äußeren Kontur, der biegegeschwächte Faltlinien (34) aufweist, werkzeugfrei mittels Faltung einteilig ausbildbar und werkzeug- und befestigungselementfrei mit der Schiene (4) und einem Modulrahmen (3) des Solarpaneels (2) verbindbar sind, und wobei der erste Ständer (5) und der zweite Ständer (6) mit einander zugewandten Frontseiten (10) gemeinsam und beabstandet zueinander auf der einen dreiseitig geschlossenen Profilquerschnitt mit Auskragungen (13) in die offene Seite hinein aufweisenden Schiene (4) montierbar sind, **dadurch gekennzeichnet, dass** der jeweilige Ständer (5, 6) eine im Wesentlichen dreieckige seitliche Giebelfläche (12) und annähernd U-förmige Frontseite (10) und Rückseite (11) aufweist, die von Schenkeln (7), die einen annähernd U-förmigen Querschnitt mit sich zur Frontseite (10) öffnendem U aufweisen, und einer Grundplatte (14) gebildet werden, wobei der Ständer (5, 6) an der Grundplatte (14) ausgebildete Rastnäpfe (26) sowie Verriegelungslaschen (24) aufweist, die so beschaffen sind, dass sie in Auskragungen (13) und Gegenelemente (30) der Schiene (4) eingreifbar sind, und wobei der Ständer (5, 6) weiterhin von der Grundplatte (14) weg weisende Schenkel (7) mit an dem von der Grundplatte (14) weg weisenden Ende des Schenkels (7) angeordneten Auflagen (28), auf die der Modulrahmen (3) des Solarpaneels (2) auflegbar ist, und Ausnehmungen (16), die in den Modulrahmen (3) in der Weise eingreifbar ausgebildet sind, aufweist, dass die Ständeranordnung (1) mit der Schiene (4) und dem Modulrahmen (3) eine steife Verbindung bildet, und wobei eine Verdrehsicherung des Ständers (5, 6) vorgesehen ist, die zwei innere Haltelaschen (23), die an der Auskragung (13) der Schiene (4) an der Innenseite des Querschnittsprofils angreifbar ausgebildet sind, und zwei Endlagensicherungslaschen (22), die an der Außenwand der Schiene (4) angreifbar ausgebildet sind, aufweist.

2. Ständeranordnung nach Anspruch 1, wobei die Faltlinien (34), die die Verbindung der Schenkel (7) mit der Grundplatte (14) markieren, nicht parallel zueinander verlaufen.

3. Ständeranordnung nach einem der vorherigen Ansprüche, wobei die Ausnehmungen (16) der Schenkel (7) ein längs zu seiner Achse geschlitztes rohrförmiges Element aufweisen, das zumindest beide Schenkelflanken (8, 9) eines Schenkels verbindend in die Ausnehmungen (16) eingebracht ist und der Schlitz in dem rohrförmigen Element der Aufnahme des Modulrahmens (3) dient.

4. Ständeranordnung nach einem der vorherigen Ansprüche, wobei die vertikal zur Ebene des zweidimensionalen Zuschnitts (6') eingeprägten Rastnäpfe (26) eine horizontale Nut aufweisen, die zum Eingreifen in die Auskragung (13) an der Innenseite des Querschnittsprofils der Schiene (4) ausgebildet ist.

5. Ständeranordnung nach einem der vorherigen Ansprüche, wobei die Gegenelemente (30) der Schiene (4) zum Zusammenwirken mit den Verriegelungslaschen (24) zumindest teilweise als Langlöcher oder in den inneren Querschnitt der Schiene (4) hineinragende Nasen ausgebildet sind, und wobei die Verriegelungslaschen (24) in der Weise ausgebildet sind, dass sie beim Zusammenwirken mit den Gegenelementen (30) eine Längsbewegung des Ständers (5, 6) entlang der Schiene (4) in einer ersten Richtung, der Bewegungsrichtung (32), von dem anderen Ständer (5, 6) weg zulassen und in einer zweiten Richtung, der Blockierrichtung (33), zu dem anderen Ständer (5, 6) hin blockieren.

6. Ständeranordnung nach einem der vorherigen Ansprüche, wobei die Endlagensicherungslaschen (22) in ihrer montierten Position in der Weise an der Außenwand der Schiene (4) angreifen, dass das Profil der Schiene (4) am Aufspringen gehindert wird.

7. Ständeranordnung nach einem der vorherigen Ansprüche, wobei an der inneren Schenkelflanke (8) an ihrem zur Grundplatte (14) hin weisenden Ende ein trapezförmiges Verspannelement (20), das sich zur Schenkelflanke (8) hin verjüngt, ausgebildet ist, das im aufgerichteten Zustand des Ständers (5, 6) in eine trapezförmige Ausnehmung (21) in der Grundplatte (14), wobei sich die trapezförmige Ausnehmung (21) zu den Schenkeln (7) hin verjüngt, einführbar und nach dem Einführen durch Umlegen und Drücken der an der Rückseite der Grundplatte (14) befindlichen Klappe (35) zwischen die inneren Schenkelflanken (8) diese in der trapezförmigen Ausnehmung (21) der Grundplatte (14) hin zu den äußeren Schenkelflanken (9) in der Weise bewegt werden, dass die Schenkel (7) gegen die Grundplatte (14) gezogen und dort fixiert werden.

8. Ständeranordnung nach einem der vorherigen Ansprüche, wobei der erste Ständer (5) für die bezüglich des Untergrundes niedrigere Position und der zweite Ständer (6) für die bezüglich des Untergrundes höhere Position des gegenüber dem Untergrund in geneigter Position montierten Solarpaneels (2) vorgesehen ist, wobei die Auflagen (28) entsprechende Neigung aufweisen.

9. Ständeranordnung nach einem der vorherigen Ansprüche, wobei die biegegeschwächten Faltlinien (34) des zweidimensionalen Zuschnitts (6') durch zumindest abschnittsweise Perforation (27) erzeugt werden.

10. Ständeranordnung nach einem der vorherigen Ansprüche, wobei der zweidimensionale Zuschnitt (6') aus einem korrosionsgeschützten Metallblech besteht.

11. Ständeranordnung nach einem der vorherigen Ansprüche, wobei wenigstens ein Ständer (5, 6) ein Versteifungselement (15) aufweist, das in Ausnehmungen (19) in den Schenkeln (7) diese verbindend einsetzbar ist.

12. Verfahren zur Herstellung einer Ständeranordnung nach Anspruch 1, 4 oder 9, **dadurch gekennzeichnet, dass** der zweidimensionale Zuschnitt (6') der Ständer (5, 6) durch ein bekanntes Schneidverfahren in nur einer Aufspannung in der Weise ausgeschnitten wird, dass alle Vertiefungen und Abkantungen in eine Richtung verlaufen und die Ausbildung der horizontalen Nut der Rastnäpfe (26) durch dem Tiefziehen der Rastnäpfe (26) vorangehende Lochung im Bereich der späteren Nut, deren Längsausdehnung definierend, hervorgerufen wird.

## Claims

1. A base assembly for a solar panel, wherein a first base (5), a second base (6) and a rail (4) are provided, said bases (5, 6) each being integrally formable from a two-dimensional blank (6') of the outer contour having bend-weakened fold lines (34) through folding without tools, and each being connectable to the rail (4) and a module frame (3) of the solar panel (2) without tools or fasteners, and wherein the first base (5) and the second base (6) are mountable, together and spaced apart from one another with their front sides (10) facing each other, on the rail (4), said rail having a profile cross-section closed on three sides with projections (13) into the open side, **characterized in that** the respective base (5, 6) has an essentially triangular lateral gable surface (12) and approximately U-shaped front (10) and rear (11) sides that are formed by legs (7), said legs having an approximately U-shaped cross-section with said U-shape opening towards the front side (10), and by a base plate (14), wherein the base (5, 6) has latching cups (26) as well as locking tabs (24) formed at the base plate (14) and configured so as to be able to engage projections (13) and mating elements (30) of the rail (4), and wherein the base (5, 6) further has legs (7), said legs facing away from the base plate (14) and having supports (28) that are arranged at the end of the leg (7) facing away from the base plate (14) and are for supporting the module frame (3) of the solar panel (2), and recesses (16) formed so as to be able to engage the module frame (3) in such a manner that the base assembly (1) forms a rigid connection with the rail (4) and the module frame (3), and wherein an anti-rotation stop of the base (5, 6) is provided which has two inner holding tabs (23), said holding tabs being formed so as to be able to grip the projection (13) of the rail (4) on the inner side of the cross-sectional profile, and two end position securing tabs (22) formed so as to be able to grip the outer wall of the rail (4).

2. The base assembly according to claim 1, wherein the fold lines (34) which mark the connection between the legs (7) and the base plate (14) do not extend parallel to one another.

3. The base assembly according to any one of the preceding claims, wherein the recesses (16) of the legs (7) have a tubular member slotted longitudinally to its axis, said tubular member being introduced into the recesses (16) thereby connecting at least the two leg flanks (8, 9) of a leg, and the slot in the tubular member serves to receive the module frame (3).

4. The base assembly according to any one of the preceding claims, wherein the latching cups (26) impressed orthogonally to the plane of the two-dimensional blank (6') have a horizontal groove formed for engaging the projection (13) on the inner side of the cross-sectional profile of the rail (4).

5. The base assembly according to any one of the preceding claims, wherein the mating elements (30) of the rail (4) are at least partially formed as oblong holes or catches protruding into the inner cross-section of the rail (4) for cooperation with the locking tabs (24), and wherein the locking tabs (24) are formed in such a manner that, when cooperating with the mating elements (30), they allow a longitudinal movement of the base (5, 6) along the rail (4) in a first direction, i.e. the direction (32) of movement, away from the other base (5, 6), and block said longitudinal movement in a second direction, i.e. the blocking direction (33), towards the other base (5, 6).

6. The base assembly according to any one of the preceding claims, wherein the end position securing tabs (22) in their mounted position grip the outer wall of the rail (4) in such a manner that the profile of the rail (4) is prevented from snapping open.

7. The base assembly according to any one of the preceding claims, wherein a trapezoidal clamping element (20) which tapers towards the leg flank (8) is formed at the inner leg flank (8) at its end facing towards the base plate (14), which clamping element is, in the erected state of the base (5, 6), insertable into a trapezoidal recess (21) in the base plate (14), said trapezoidal recess (21) tapering towards the legs (7), and upon insertion through folding over and pressing the flap (35) located at the rear side of the base plate (14) between the inner leg flanks (8), the latter are moved inside the trapezoidal recess (21) of the base plate (14) towards the outer leg flanks (9) in such a manner that the legs (7) are pulled against the base plate (14) and fixed there.

8. The base assembly according to any one of the preceding claims, wherein the first base (5) is provided for the lower position relative to the underground, and the second base (6) is provided for the higher position relative to the underground, of the solar panel (2) mounted in an inclined position relative to the underground, the supports (28) having a corresponding inclination.

9. The base assembly according to any one of the preceding claims, wherein the bend-weakened fold lines (34) of the two-dimensional blank (6') are created through perforation (27) at least in sections.

10. The base assembly according to any one of the preceding claims, wherein the two-dimensional blank (6') consists of a corrosion-protected metal sheet.

11. The base assembly according to any one of the preceding claims, wherein at least one base (5, 6) has a stiffening member (15) which is insertable into recesses (19) in the legs (7) thereby connecting the latter.

12. A method for manufacturing a base assembly according to claim 1, 4 or 9, **characterized in that** the two-dimensional blank (6') of the bases (5, 6) is cut out in only one setup using a known cutting process in such a manner that all depressions and bendings extend in one direction and the formation of the horizontal groove of the latching cups (26) is effected through punching in the region of the subsequent groove, thereby defining its longitudinal extension, prior to the deep drawing of the latching cups (26).

## Revendications

1. Agencement de supports pour un panneau solaire, dans lequel un premier support (5), un second support (6) et un rail (4) sont prévus, dans lequel les supports (5, 6) peuvent être chacun réalisés d'une pièce sans outil au moyen d'un pliage à partir d'une découpe bidimensionnelle (6') du contour externe qui présente des lignes de pliage (34) affaiblies à la flexion et peuvent être connectés sans outil ni élément de fixation au rail (4) et à un cadre modulaire (3) du panneau solaire (2), et dans lequel le premier support (5) et le second support (6) peuvent être montés ensemble et de manière écartée l'un de l'autre avec des côtés avant tournés l'un vers l'autre (10) sur le rail (4) présentant une section transversale de profil fermée sur trois côtés avec des saillies (13) dans le côté ouvert, **caractérisé en ce que** le support respectif (5, 6) présente une face de pignon latérale (12) essentiellement triangulaire et un côté avant (10) et un côté arrière (11) approximativement en forme de U qui sont formés de branches (7) qui présentent une section transversale approximativement en forme de U avec un U s'ouvrant vers le côté avant (10), et d'une plaque de base (14), dans lequel le support (5, 6) présente des godets d'encliquetage (26) réalisés sur la plaque de base (14) ainsi que des colliers de verrouillage (24) qui sont fournis de sorte qu'ils peuvent être engrenés dans des saillies (13) et des éléments conjugués (30) du rail (4), et dans lequel le support (5, 6) présente en outre des branches (7) détournées de la plaque de base (14) avec des appuis (28) disposés à l'extrémité de la branche (7) détournée de la plaque de base (14) sur lesquels le cadre modulaire (3) du panneau solaire (2) peut être appuyé, et des évidements (16) qui sont réalisés de manière à pouvoir être engrenés dans le cadre modulaire (3) de telle sorte que l'agencement de supports (1) forme avec le rail (4) et le cadre modulaire (3) une connexion rigide, et dans lequel un élément anti-rotation du support (5, 6) est prévu, lequel présente deux colliers de maintien internes (23) qui sont réalisés de manière à pouvoir être appliqués sur la saillie (13) du rail (4) sur le côté interne du profil de section transversale et deux colliers de sécurité de position terminale (22) qui sont réalisés de manière à pouvoir être appliqués sur la paroi externe du rail (4).

2. Agencement de supports selon la revendication 1, dans lequel les lignes de pliage (34) qui marquent la connexion des branches (7) à la plaque de base (14) ne s'étendent pas parallèlement les unes aux autres.

3. Agencement de supports selon une des revendications précédentes, dans lequel les évidements (16) des branches (7) présentent un élément tubulaire fendu longitudinalement par rapport à son axe qui est introduit dans les évidements (16) en connectant au moins les deux flancs de branche (8, 9) d'une branche et la fente dans l'élément tubulaire sert à la réception du cadre modulaire (3).

4. Agencement de supports selon une des revendications précédentes, dans lequel les godets d'encliquetage (26) incrustés verticalement par rapport au plan de la découpe bidimensionnelle (6') présentent une rainure horizontale qui est réalisée pour l'engrènement dans la saillie (13) sur le côté interne du profil de section transversale du rail (4).

5. Agencement de supports selon une des revendications précédentes, dans lequel les éléments conjugués (30) du rail (4) sont réalisés pour la coopération avec les colliers de verrouillage (24) au moins partiellement en tant que trous oblongs ou nez avançant dans la section transversale interne du rail (4), et dans lequel les colliers de verrouillage (24) sont réalisés de telle sorte qu'ils autorisent lors de la coopération avec les éléments conjugués (30) un mouvement longitudinal du support (5, 6) le long du rail (4) dans une première direction, la direction de mouvement (32), à l'écart de l'autre support (5, 6) et le bloquent dans une seconde direction, la direction de blocage (33), vers l'autre support (5, 6).

6. Agencement de supports selon une des revendications précédentes, dans lequel les colliers de sécurité de position terminale (22) sont appliqués dans leur position montée sur la paroi externe du rail (4) de telle sorte que le profil du rail (4) est empêché de bondir.

7. Agencement de supports selon une des revendications précédentes, dans lequel un élément de déformation trapézoïdal (20) qui rétrécit vers le flanc de branche (8) est réalisé sur le flanc de branche interne (8) à son extrémité tournée vers la plaque de base (14), lequel peut être introduit dans l'état érigé du support (5, 6) dans un évidement trapézoïdal (21) dans la plaque de base (14), dans lequel l'évidement trapézoïdal (21) rétrécit vers les branches (7), et ceux-ci sont déplacés après l'introduction par rabattage et enfoncement du volet (35) se trouvant sur le côté arrière de la plaque de base (14) entre les flancs de branche internes (8) dans l'évidement trapézoïdal (21) de la plaque de base (14) vers les flancs de branche externes (9) de telle sorte que les branches (7) sont tirées contre la plaque de base (14) et y sont fixées.

8. Agencement de supports selon une des revendications précédentes, dans lequel le premier support (5) est prévu pour la position la plus basse par rapport au substrat et le second support (6) pour la position la plus haute par rapport au substrat du panneau solaire (2) monté dans une position inclinée par rapport au substrat, dans lequel les appuis (28) présentent une inclinaison correspondante.

9. Agencement de supports selon une des revendications précédentes, dans lequel les lignes de pliage (34) affaiblies à la flexion de la découpe bidimensionnelle (6') sont générées par une perforation (27) au moins par sections.

10. Agencement de supports selon une des revendications précédentes, dans lequel la découpe bidimensionnelle (6') se compose d'une tôle métallique protégée contre la corrosion.

11. Agencement de supports selon une des revendications précédentes, dans lequel au moins un support (5, 6) présente un élément de renforcement (15) qui peut être inséré dans des évidements (19) dans les branches (7) en connectant celles-ci.

12. Procédé de fabrication d'un agencement de supports selon la revendication 1, 4 ou 9, **caractérisé en ce que** la découpe bidimensionnelle (6') des supports (5, 6) est découpée par un procédé de coupe connu dans une seule fixation de telle sorte que tous les renforcements et chanfreins s'étendent dans une direction et la réalisation de la rainure horizontale des godets d'encliquetage (26) est générée par une perforation précédant l'emboutissage des godets d'encliquetage (26) dans la région de la rainure ultérieure en définissant son étendue longitudinale.
